# EUROPÄISCHE PATENTANMELDUNG

(11) **EP 1 008 406 A2**
(43) Veröffentlichungstag der Anmeldung: **14.06.2000**
(21) Anmeldenummer: 99120685.5
(22) Anmeldetag: 19.10.1999
(51) Int. Cl.: B22F 3/11

(54) **Herstellverfahren für ein mit einer Leichtmetall-Schaumstruktur ausgefülltes Hohlteil**

(30) Priorität: 09.12.1998 DE 19856730
(71) Anmelder: Bayerische Motoren Werke Aktiengesellschaft, 80809 München (DE)
(72) Erfinder: Kalke, Stefan, Dr., 85354 Freising (DE)

(57) **Zusammenfassung**

Die Erfindung betrifft ein Herstellverfahren für ein Hohlprofilteil (1), insbesondere aus einer Leichtmetall-Legierung, dessen Hohlraum mit einer Leichtmetall-Schaumstruktur ausgefüllt ist, wobei die die Leichtmetall-Schaumstruktur bildende aufschäumbare Metallpulvermischung (4) in einem Strangpreßverfahren in den Hohlraum eingebracht wird. Bevorzugt wird die Metallpulvermischung (4) mit dem Einbringen in den Hohlraum aufgeschäumt. Dabei kann das Hohlprofilteil (1) in einem Strangpreßverfahren geformt werden, wobei das Einbringen der Metallpulvermischung (4) in den Hohlraum des Hohlprofilteiles (1) im wesentlichen gleichzeitig mit dem Formen des letzteren erfolgt. Nach einem alternativen Herstellverfahren kann das Hohlprofilteil (1) in einem Strangpreßverfahren um die ebenfalls stranggepreßte, noch nicht aufgeschäumte Metallpulvermischung (4) herumgeformt werden.

## Beschreibung

Die Erfindung betrifft ein Herstellverfahren für ein Hohlprofilteil, insbesondere aus einer Leichtmetall-Legierung, dessen Innenraum bzw. Hohlraum mit einer Leichtmetall-Schaumstruktur ausgefüllt ist. Zum technischen Umfeld wird neben der DE 40 18 360 C1 insbesondere auf die DE 195 01 508 C1 verwiesen.

Die Herstellung von Leichtmetall-, insbesondere Aluminium-Schaumteilen ist gängiger Stand der Technik. Bekannt sind bereits auch Verbund-Bauteile, die aus einem Leichtmetall-Hohlprofilteil bestehen, dessen Innenraum bzw. Hohlraum mit Aluminiumschaum, ausgefüllt ist. Dabei kann eine in der gewünschten Form vorgefertigte Aluminium- oder allgemein Leichtmetall-Schaumstruktur bspw. in ein vorgefertigtes Hohlprofilteil eingebracht und mit diesem verklebt werden oder es kann - wie in der oben zweitgenannten Schrift beschrieben ist - ein Aluminium-Hohlprofilteil in einem Druckgußverfahren um die vorgefertigte Aluminium-Schaumstruktur herum und letztgenannte somit in sich einschließend hergestellt werden.

Solchermaßen entstehende Verbundbauteile zeigen hinsichtlich einer Reihe von Anforderungen ein vorteilhaftes Verhalten und können bspw. als Tragstrukturteile im Fahrzeugbau Anwendung finden. Nachteilig sind jedoch die relativ aufwendigen Herstellverfahren, da zunächst aus der letztendlich die Leichtmetall-Schaumstruktur bildenden aufschäumbaren Leichtmetall- (bzw. Aluminium-) Pulvermischung bspw. durch Pressformen bzw. Sintern ein vorgeformtes sog. Halbzeug hergestellt wird. Dieses Halbzeug wird dann in einem weiteren Arbeitsschritt durch Aufschäumen der Leichtmetall-Pulvermischung, die selbstverständlich auch ein geeignetes Aufschäummittel enthält, in die Leichtmetall-Schaumstruktur umgeformt. Diese muß danach in noch einem weiteren Arbeitsschritt in den Hohlraum des vorgefertigten oder in geeigneter Weise um diese Schaumstruktur herum gefertigten Hohlprofilteiles eingebracht und mit diesem verbunden werden.

Ein demgegenüber vereinfachtes Herstellverfahren für ein Hohlprofilteil, insbesondere aus einer Leichtmetall-Legierung, dessen Innenraum bzw. Hohlraum mit einer Leichtmetall-Schaumstruktur ausgefüllt ist, aufzuzeigen, ist Aufgabe der vorliegenden Erfindung.
Zur Lösung dieser Aufgabe wird ein erstes Herstellverfahren vorgeschlagen, nach welchem die die Leichtmetall-Schaumstruktur bildende aufschäumbare Metallpulvermischung in einem Strangpreßverfahren in den Hohlraum des Hohlprofilteiles eingebracht wird. Vorteilhafte Weiterbildungen dieses ersten Herstellverfahrens sind in den beiden Unteransprüchen angegeben, während ein alternatives Herstellverfahren Inhalt des unabhängigen Anspruchs 4 ist, wonach ein Hohlprofilteil, insbesondere aus einer Leichtmetall-Legierung, dessen Hohlraum mit einer Leichtmetall-Schaumstruktur ausgefüllt ist, dadurch hergestellt wird, daß das Hohlprofilteil in einem Strangpreßverfahren um die ebenfalls stranggepreßte, noch nicht aufgeschäumte Metallpulvermischung herumgeformt wird.

Beim soeben erstgenannten Herstellverfahren wird erfindungsgemäß das weiter oben sog. Halbzeug, das aus der noch nicht aufgeschäumten Leichtmetall-Pulvermischung besteht, wie grundsätzlich bekannt in einem Strangpreßverfahren geformt, jedoch erfolgt dieses Vorformen des Halbzeuges quasi direkt in das Hohlprofilteil hinein. Es entsteht somit kein separates Halbzeug-Teil mehr, welches zunächst in ein weiteres Werkzeug eingelegt werden und in diesem zur Leichtmetall-Schaumstruktur aufgeschäumt werden muß, sondern dieses Halbzeugteil wird sofort im Hohlprofilteil gebildet und kann danach direkt in diesem aufgeschäumt werden. Daß hierdurch eine Vielzahl bisher notwendiger Zwischen-Arbeitsschritte ersatzlos entfallen können, liegt auf der Hand.

Im Sinne einer vorteilhaften Weiterbildung kann praktisch gleichzeitig mit dem Strangpressen der Leichtmetall-Pulvermischung das Aufschäumen derselben (durch Wärmebeaufschlagung) erfolgen, da sich die stranggepreßte aufschäumbare Metallpulvermischung ja bereits im Hohlprofilteil befindet. Selbsttätig nimmt die Leichtmetall-Schaumstruktur dann die gewünschte Form an und wird - da das Aufschäumen unter Wärmeeinwirkung im Hohlprofilteil erfolgt - außenseitig fest mit den den Hohlraum begrenzenden Innenwänden des Hohlprofilteiles verbunden.

Die beigefügte, stark abstrahierte Prinzipskizze verdeutlicht den bislang beschriebenen Herstellprozeß.
Demnach wird in ein hier rohrförmiges Hohlprofilteil 1, welches (zunächst einmal zumindest teilweise vorgefertigt) in einem Aufnehmer 2 gehalten ist, durch Strangpressen mittels eines hier ringförmigen Preßstempels 3, dessen Außenkontur dem hohlzylindrischen Aufnehmer 2 angepaßt ist und der somit innerhalb diesem geführt ist, in den Innenraum bzw. Hohlraum des Hohlprofilteiles 1 eine geeignete Menge einer aufschäumbaren Metallpulvermischung 4 (bevorzugt aus einer geeigneten Aluminiumlegierung bestehend, die mit einem Aufschäummittel versehen ist) eingebracht. Die Bewegungsrichtung des Preßstempels 3 ist dabei durch die beiden Pfeile 7 dargestellt.

Ein in den Innen- bzw. Hohlraum des Hohlprofilteiles 1 hineinragender Werkzeugdorn 5 sorgt dabei dafür, daß dieser Hohlraum nicht vollständig mit der Metallpulvermischung 4 aufgefüllt wird, da dann selbstverständlich kein Aufschäumen mehr möglich wäre. Durch diesen Werkzeugdorn 5, durch die den Hohlraum begrenzende Innenwand des Hohlprofilteiles 1, sowie durch den Preßstempel 3 wird die Metallpulvermischung 5 somit zu einem sog. hier ebenfalls rohrförmigen Halbzeug preßgeformt, welches anschließend daran oder nahezu gleichzeitig unter Wärmebeaufschlagung aufgeschäumt wird, wobei für diesen Aufschäumvorgang selbstverständlich der Werkzeugdorn 5 entfernt werden muß.

Es ist aber auch möglich, das Hohlprofilteil 1 selbst ebenfalls in einem Prozeßschritt durch Strangpressen endzuformen, wobei das Einbringen der Metallpulvermischung 4 in den Hohlraum des Hohlprofilteiles 1 im wesentlichen gleichzeitig mit dem Formen des letzteren erfolgt. Dies ist durch die sich in der Figurendarstellung linksseitig an den Aufnehmer 2 anschließende lediglich abstrakt dargestellte Matrize 6 möglich. Durch diese formende Matrize 6 wird das grob vorgeformte Hohlprofilteil 1 zusammen mit der Metallpulvermischung 4 mittels des Preßstempels 3 gemäß Pfeilrichtung 7 (von rechts nach links) hindurchgeschoben. Hier erfolgt dann in einem einzigen Werkzeug unter Zusammenfassung der vielen bislang separaten Arbeitsschritte im wesentlichen gleichzeitig die Herstellung des Hohlprofilteiles 1, des aus der Metallpulvermischung 4 bestehenden Halbzeuges 4' und der aus diesem Halbzeug 4' entstehenden Leichtmetall-Schaumstruktur durch Aufschäumen des letztgenannten, wobei letztere direkt in das annähernd gleichzeitig entstehende Hohlprofilteil 1 hineingeformt wird. Hierbei handelt es sich somit um ein Verbundstrangpressen oder um eine sog. Coextrusion, an die sich noch das Aufschäumen des Halbzeuges 4' bzw. der dieses bildenen Metallpulvermischung 4 anschließt, was aber grundsätzlich im gleichen Werkzeug erfolgen kann.

Wieder etwas aufwendiger, aber dennoch die weiter oben gestellte Aufgabe lösend ist ein alternatives Herstellverfahren, wonach das Hohlprofilteil in einem Strangpreßverfahren um die ebenfalls stranggepreßte, noch nicht aufgeschäumte Metallpulvermischung herumgeformt wird. Auch hier wird somit das sog. Halbzeug, das aus der noch nicht aufgeschäumten Leichtmetall-Pulvermischung besteht, in einem Strangpreßverfahren geformt, dabei jedoch vorgeformt. Daraufhin erfolgt das Formen des Hohlprofilteiles um dieses Halbzeug herum, und zwar abermals durch ein Strangpreßverfahren. In einem letzten Arbeitsschritt, der sich direkt an das Strangpressen des Hohlprofilteiles anschließen kann und insbesondere im gleichen Werkzeug und somit quasi unmittelbar zusammen mit dem Strangpressen durchgeführt werden kann, erfolgt dann das Aufschäumen des Halbzeuges zur Leichtmetall-Schaumstruktur. Daß auch hierbei eine Vielzahl bisher notwendiger Zwischen-Arbeitsschritte ersatzlos entfallen können, liegt auf der Hand. Im übrigen können durchaus eine Vielzahl von Details abweichend von den obigen Erläuterungen gestaltet werden, ohne den Inhalt der Patentansprüche zu verlassen.

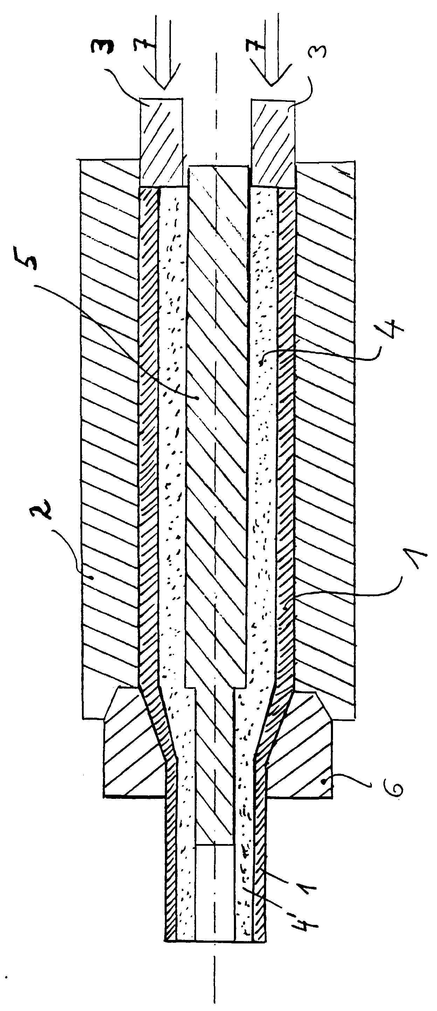

## Patentansprüche

1. Herstellverfahren für ein Hohlprofilteil (1), insbesondere aus einer Leichtmetall-Legierung, dessen Innenraum bzw. Hohlraum mit einer Leichtmetall-Schaumstruktur ausgefüllt ist, wobei die die Leichtmetall-Schaumstruktur bildende aufschäumbare Metallpulvermischung (4) in einem Strangpreßverfahren in den Hohlraum des Hohlprofilteiles (1) eingebracht wird.

2. Herstellverfahren nach Anspruch 1,
dadurch gekennzeichnet, daß die Metallpulvermischung (4) mit dem Einbringen in den Hohlraum aufgeschäumt wird.

3. Herstellverfahren nach Anspruch 1 oder 2,
dadurch gekennzeichnet, daß das Hohlprofilteil (1) in einem Strangpreßverfahren geformt wird, wobei das Einbringen der Metallpulvermischung (4) in den Hohlraum des Hohlprofilteiles (1) im wesentlichen gleichzeitig mit dem Formen des letzteren erfolgt.

4. Herstellverfahren für ein Hohlprofilteil, insbesondere aus einer Leichtmetall-Legierung, dessen Hohlraum mit einer Leichtmetall-Schaumstruktur ausgefüllt ist, wobei das Hohlprofilteil in einem Strangpreßverfahren um die ebenfalls stranggepreßte, noch nicht aufgeschäumte Metallpulvermischung herumgeformt wird.
